# EUROPEAN PATENT APPLICATION

(11) **EP 2 518 448 A1**
(43) Date of publication of application: **31.10.2012**
(21) Application number: 11163844.1
(22) Date of filing: 27.04.2011
(51) Int. Cl.: G01D 4/00

(54) **System to optimize utility meter upstream communications and method for managing these communications**

(71) Applicant: Nagravision S.A., 1033 Cheseaux-sur-Lausanne (CH)
(72) Inventor: Le Buhan, Corinne, 1619, Les Paccots (CH); Nicolas, Christophe, 1162, Saint-Prex (CH); Conus, Joël, 1417, Essertines-sur-Yverdon (CH)
(74) Representative: Leman Consulting S.A.

(57) **Abstract**

The present invention relates to a utility meter for metering at least one utility consumption comprising:
- a memory to store at least one personal key (K), at least one unique identifier (ID0), at least one utility consumption value (V) metered by the utility meter, at least one remote management key (K0, K1),
- means for sending/receiving utility messages,
- means to authenticate these utility messages by using said personal key (K),
- means to generate a payload key (Kp),
- means to encrypt the utility consumption value (V) with the payload key (Kp),
- means to generate at least one cryptogram (C0, C1), this cryptogram being formed by the payload key (Kp) encrypted by the remote management key (k0, K1),
- means to send a utility message comprising the encrypted utility consumption value (V) and the cryptogram (C0, C1) into one or two separated utility messages said utility message being encrypted by the personal key (K).

The invention also relates to a method to manage a communication between a utility meter and at least one remote utility management center. The communication being supervised by at least one supervision center, said utility meter comprising:
- a memory to store at least one personal key (K), at least one unique identifier (ID0), and an utility consumption value (V) as metered by the utility meter,
- a cryptographic module,
said method comprising the steps of:
- requesting to the supervision center by a remote utility management center the association with a particular utility meter, said request comprising at least the unique identifier (ID0) of said utility meter,
- transmitting by the supervision center a key data to the remote utility management center
- reading by the utility meter the utility consumption value (V),
- preparing a utility message comprising the utility consumption value (V), said utility message being encrypted by the personal key (K),
- sending said utility message to the remote utility management center.

## Description

### INTRODUCTION

This invention concerns the field of utility meters that are monitored and managed from at least one utility management center through a communication network.

### BACKGROUND

The on-going deregulation in worldwide energy distribution markets is driving the need for smart utility distribution grids and smart meters, enabling both utility providers and consumers to monitor the detailed consumption of an end user at any time through open communication networks. The energy market is particularly concerned as of today but related issues are also relevant to other utility markets such as water or gas.

Automated meters enable utility providers to remotely read the meter registers that record on a regular basis the user consumption information. However, this reading only occurs from time to time at the discretion of the utility provider and typically uses a private network (wireless or cable) under close control by the utility provider. The next generation of automated meters, so called smart meters, will enable utility providers to monitor the detailed consumption of an end user at any time and at a much finer granularity through open communication networks. This finer grain monitoring is expected to encourage more precisely targeted rates and offerings to the end user, possibly by competing utility providers, as the utility markets get deregulated similar to the telecommunications markets in the 90s. It will become even more relevant when HAN (Home Appliances Networks) are interconnected with the smart grid to directly report on their end usage information rather than concentrating this information reporting through the smart meter.

The utility provider can also remotely manage, configure and upgrade the meter through the communication network. In certain markets, smart meters are even required to implement a remote disconnect feature, so that the utility can remotely stop the service distribution for instance in the case of non-payment.

Consequently, a smart meter typically generates, or passes through in the HAN interconnection case, automated reading messages upstream to the remote utility provider management equipment at a much more frequent rate than former automated meters did. Those messages also possibly carry significantly longer payload as more details are monitored by the utility provider.

Clearly, the resulting dependency of the utility service and billing functionality on remote communication messages raises new concerns on data privacy and confidentiality as well the effective system robustness to software bugs and emerging threats such as smart grid worms and viruses taking advantage of smart meter security design flaws. Those flaws may not be known at the time of deployment, but may become critical later. This is particularly evident in the case of the remote disconnect feature, as a major disruption target for cyberterrorism but also a possible entry point for local thieves as a way to disconnect some house alarms from their power source.

In practice, today's security designs for smart grids and smart meters are largely inspired by the telecommunication industry and a large part of them is subject to emerging standardization by international committees such as ANSI or IEC. Sensitive messages need to be protected by a secure authenticated channel to be established using cryptographic protocols over an individual point-to-point communication between the utility meter and the remote utility provider management equipment. Therefore, recent standard specification in that area such as ANSI C12.22 or IEC 62056/COSEM define how to encrypt and sign the message payloads, typically by means of a session key setup between the utility management center or data collection concentrator and the utility meter.

As described in the "OpenWay by Itron Security Overview" White Paper from Itron, for practical, operational reasons, some of the downstream messages from the utility management center or collector concentrator may be broadcast or multicast into the utility grid network without a secure receipt acknowledgement from each target utility meter, typically because of the overhead in managing the corresponding upstream messages in a large scale metering deployment (for instance 10 million meters). However the individual meter utility usage consumption information such as actual utility usage, event logs etc have to be communicated back point-to-point from the utility meter to the utility management center or collector concentrator. Therefore, to scale their smart metering system to support up to 10 million meters, Itron reports the need for processing up to 24000 messages per second upstream, while broadcast/multicast downstream messaging enables to factorize the messages down to 200 per second.

In practice, the scalability issue will become even more critical as the smart grid becomes more widely deployed and deregulated because of three major independent factors:
● Deregulation enabling the end user to choose between several utility providers service concurrent offerings from a single utility meter, possibly on the fly. In that scenario the utility meter will need to communicate upstream with several utility management centers or collector concentrators, thus basically multiplying the number of upstream messages by the number of utility providers.
● The need to systematically enforce the utility meter security messaging and improve the internal utility meter security implementation to prevent cyberterrorist smart grid attack risks as well as end user meter hacking fraud incentive. The highly sensitive utility meter cryptographic module therefore needs to operate as deeply as possible into the meter system design, typically down to the utility meter data and key registers, rather than at the communication network interface, thus requiring additional cryptographic protocols and messaging mechanisms in addition to the current standard specifications.

There is therefore a need for a communication system and method that further optimizes the upstream messages overload between a utility usage monitoring device, in particular a utility meter, and at least one utility management device.

### SUMMARY OF THE INVENTION

The present invention relates to a utility meter for metering at least one utility consumption comprising:
- a memory to store at least one personal key K, at least one unique identifier ID0, at least one utility consumption value V metered by the utility meter, at least one remote management key K0, K1,
- means for sending/receiving utility messages,
- means to generate a payload key Kp,
- means to encrypt the utility consumption value V with the payload key Kp,
- means to generate at least one cryptogram C0, C1, this cryptogram being formed by the payload key Kp encrypted by the remote management key k0, K1,
- means to send the encrypted utility consumption value V and the cryptogram C0, C1 into at least one utility messages. Thus, the encrypted utility consumption value V and the cryptogram may be sent either into the same message or into two separated message.

According to the present invention these utility messages correspond to upstream messages which are preferably each split into a shared payload message and dedicated control message.

In a preferred embodiment, the utility usage monitoring device (namely the utility meter) generates a payload key Kp, encrypts said payload key Kp with the key K0, k1 of a remote management center, transmits said encrypted payload key Kp in at least one control message to at least one utility management center, encrypts at least one shared payload by means of said payload key Kp, and transmits at least one encrypted shared payload message to said at least one utility management center.

In another embodiment, the utility usage monitoring device pre-processes the payload key generation and shared payload encryption operations at the time of storing payload data into said device registers, and communicates the shared payload messages to the remote utility management center at a later time.

In a further embodiment, for further messaging load balancing purposes, the time of upstream communication by a utility usage monitoring device to the remote utility management center is scheduled by the utility usage monitoring device according to programming instructions received from the remote utility management center, or triggered by certain events at the utility usage monitoring device as pre-programmed into said device firmware, or directly triggered by request messages received from the remote utility management center through the communication network.

The present invention also relates to a method to manage a communication between a utility meter for metering at least one utility consumption, and at least one remote utility management center, this communication being supervised by at least one supervision center and this utility meter comprising:
- a memory to store at least one personal key K, at least one unique identifier ID0, and an utility consumption value V as metered by the utility meter,
- a cryptographic module,
   the method comprising the steps of:
- requesting to the supervision center by a remote utility management center the association with a particular utility meter, this request comprising at least the unique identifier ID0 of the utility meter,
- transmitting by the supervision center a key data to the remote utility management center; this key data being for instance the personal key K of the utility meter,
- reading by the utility meter the utility consumption value V,
- preparing a utility message comprising the utility consumption value V, the utility message being encrypted by the personal key K,
- sending said utility message to the remote utility management center.

Other further embodiments relating to the present utility meter and to corresponding method will be described in the following detailed description.

### BRIEF DESCRIPTION OF THE DRAWINGS

Figure 1 shows a block diagram of a remote utility management center connected to a utility usage monitoring meter by a communication network supporting both unidirectional broadcast or multicast messaging and bidirectional unicast messaging.
Figure 2 shows a block diagram of several remote utility management centers connected to the same utility usage monitoring meter by one or more communication networks where the upstream messaging from the meter to the utility management center is split into dedicated control messages and shared payload messages.
Figure 3 depicts the flow chart of a utility usage monitoring device operation in accordance with one embodiment of the present invention.
Figure 4 depicts the flow chart of the utility management center operation in accordance with one embodiment of the present invention.
Figure 5 depicts a block diagram showing the processing of an initialization value by a cryptographic module initialized by a secret key to generate as a result a personal key.

### DETAILED DESCRIPTION

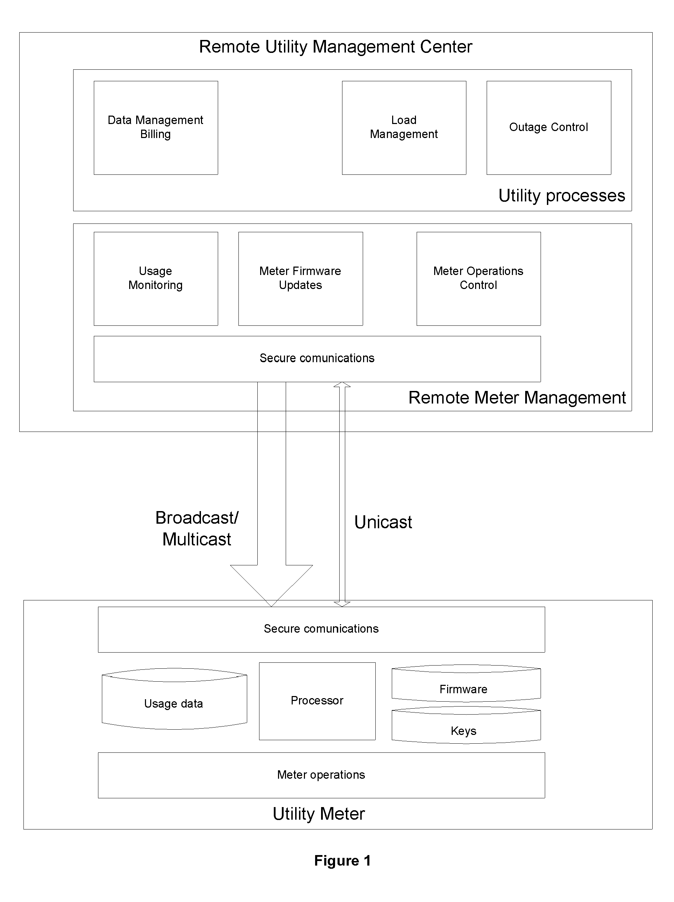

In the proposed system the utility management center from Figure 1 implements various utility management processes such as data management billing, load management and outage control, in collaboration with the remote meter management system.

The remote meter management system from Figure 1 itself comprises functional components in charge with enforcing meter usage monitoring, meter firmware updates and meter operations control by means of secure communications with the individual meters through the communication network.

The communication network from Figure 1 may be any utility metering communication physical network, such as, but not limited to, a cable network, the power line wire, or a wireless network, supporting any communication networking protocol, such as, but not limited to, Internet Protocol (IP) v4 or v6. The secure communications handlers from Figure 1 both on the remote utility management center side and the individual utility meter side further need to comply with a common messaging specification. That specification may be private when the remote utility meter management system and the utility meters are all provided by the same meter manufacturer. However, as the utility market deregulates, there is increasing need in standardizing this communication interface so that various utility vendors and various meter manufacturers can provide interoperable systems and equipment complying with common, standard specifications. Hybrid messaging protocols are another alternative where standard messaging driving the basic metering functionality is combined with advanced private messaging extensions. The private approach, either full or hybrid, is of particular relevance to ensure security monitoring, maintenance and renewability over time as any standard specifications, once published, have to be enforced as specified for the standard lifetime and therefore cannot provide any upgrade flexibility in case of a breach in the security specification without revisiting the standard itself. Examples of utility meter data networking standard specifications include the DLMS series IEC62056 in combination with the COSEM companion specifications or ANSI C12.22 in combination with the ANSI C12.19 industry standard for end device data tables.

The utility meter from Figure 1 comprises a processor in charge with managing the security communications to the utility network on the one hand and with managing the local meter operations on the other hand.

In the following description, the terminology utility usage monitoring device is used to qualify either a utility meter as illustrated in Figure 1 or a home appliance device that can be remotely monitored and managed from the utility provider management centre, as illustrated in Figure 1, or from a collector concentrator equipment. Moreover, the terminology utility management center is used to qualify either a central utility provider management center or an intermediate collector concentrator equipment node in the smart grid network, where the utility management center is under close control by the utility provider, for instance in a secure room or building.

The present invention relates to a system and method for optimizing the upstream messaging overload in a communication system between a utility usage monitoring device and at least one utility management center wherein upstream messages are preferably further split into shared payload messages and dedicated control messages.

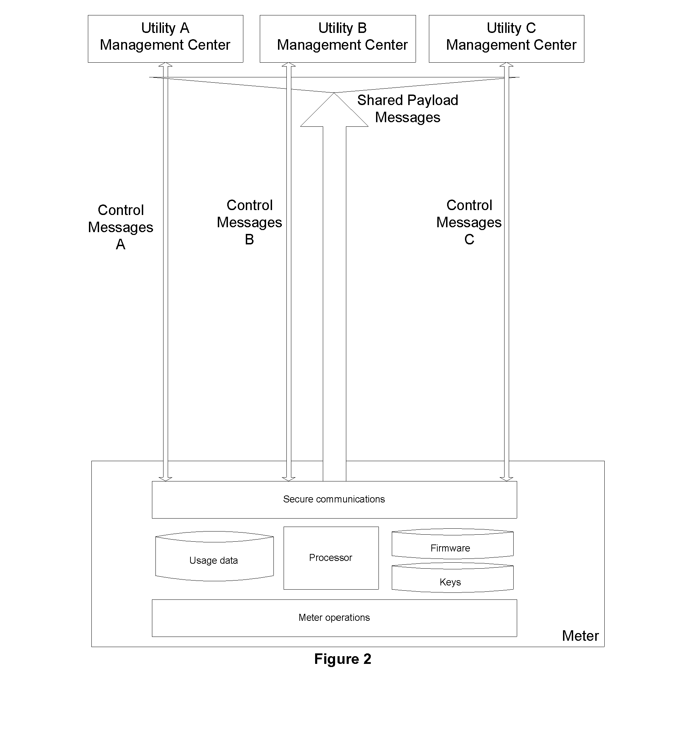

Such a system is illustrated by the block diagram of Figure 2, where a meter is connected to 3 different utility management centers A, B and C through a communication network. The meter generates:
● shared payload messages that can be unicast, multicast or broadcast to the attention of A, B and C management centers;
● control messages A that are dedicated to and unicast to utility management center A;
● control messages B that are dedicated to and unicast to utility management center B;
● control messages C that are dedicated and unicast to utility management center C.

In a preferred embodiment, the utility usage monitoring device generates a payload key Kp, encrypts said payload key Kp, transmits said encrypted payload key in at least one control message to at least one utility management center, encrypts at least one shared payload by means of said payload key Kp, and transmits at least one encrypted shared payload message to said at least one utility management center.

To this end, the utility meter of the present invention comprises:
- a memory to store at least one personal key K, at least one unique identifier ID0, at least one utility consumption value V metered by the utility meter, at least one remote management key K0, K1,
- means for sending/receiving utility messages,
- means to authenticate these utility messages by using said personal key K,
- means to generate a payload key Kp,
- means to encrypt the utility consumption value V with the payload key Kp,
- means to generate at least one cryptogram C0, C1, this cryptogram being formed by the payload key Kp encrypted by the remote management key k0, K1,
- means to send the encrypted utility consumption value V and the cryptogram C0, C1 into at least one utility message encrypted by the personal key K.

In a further embodiment, the utility meter comprises a secret key KT and a cryptographic module. The utility meter is also provided with means to receive an initialization message comprising an initialization value I0. The personal key K used to authenticate the utility messages being the result of the processing of the initialization value I0 by the cryptographic module initialized by the secret key KT.

The memory of the utility meter could also store an authority key Ka and the utility meter could comprise means to decrypt the initialization value I0 contained in the initialization message with the authority key Ka.

According to a further embodiment of the invention, the initialization message further comprises a signature S and the utility meter comprises means to verify this signature in order to allow the loading of the initialization value I0 into the cryptographic module.

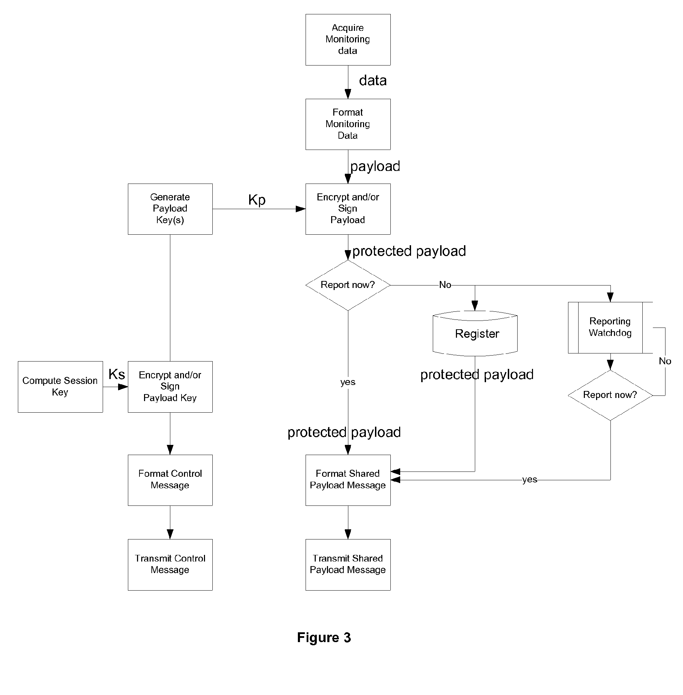

The flowchart of Figure 3 illustrates an example implementation of one embodiment where the following operations are executed:
● The utility usage monitoring device acquires monitoring data to be reported to the utility management center. Such monitoring data may comprise for example usage monitoring information, payment information, meter operation event log, security monitoring information.
● The utility monitoring device formats the monitoring data into a message payload in accordance with standard specifications such as ANSI C12.19 data tables or IEC 62056/COSEM. Alternately, the payload format may be defined in a private specification, but it is preferably in a format that is understandable by all connected utility management centers A, B and C. In certain applications, a mix of standard and private format specification may be used too.
● The utility monitoring device generates a payload key Kp, encrypts it and transmits it as Control Information to the utility management center in accordance with the secure communication protocols in place between the utility management center and the utility monitoring device. Preferably, this secure communication uses point-to-point shared secrets such as a secure authenticated channel session Ks jointly computed by the targeted utility management center and the utility monitoring device. Such point-to-point security protocols are defined for instance in the ANSI C12.22 or IEC 62056/COSEM standard specifications. The generation, encryption and transmission process of the payload key Kp may be executed synchronously or asynchronously with the payload formatting operation, but preferably in an asynchronous mode. In particular it is possible to generate the payload key Kp only once in a while so as to decrease the necessary unicast control messages needed to transmit this shared payload key individually to each utility management center A, B and C.
● The utility monitoring device protects the monitoring payload data by means of the payload key Kp. Depending on the threat models and chosen standard or private cryptography protocols, this protection operation may comprise one or more steps of encryption and/or hashing and/or signing payload data chunks using the payload key Kp, for instance in accordance with the ANSI C12.22 or IEC 62056/COSEM security specifications. Preferably, a simple efficient state-of-the-art cipher such as AES with a 128 bit payload key Kp is used. Alternately, the payload key Kp may also be combined with other private and/or public keys and/or seed values, which may be stored into the monitoring device at manufacturing time, locally generated by the monitoring device, or previously transmitted from the utility management center either directly or as part of a monitoring device firmware upgrade by any remote or local communication means. In specific cases, custom cryptography algorithms may be applied, in particular when handling sensitive security monitoring data.
● At the time of communicating back to the utility management center, in the example implementation of Figure 3, the utility monitoring device formats the shared payload message and transmits it to the utility management centers in unicast, multicast or broadcast mode.

As illustrated in Figure 3, the shared payload data processing and protection operations may be executed in advance to the transmission time. In that case, the protected shared payload data is stored in a memory buffer or register of the utility monitoring device. At the time of transmission, the utility monitoring device reads the protected shared payload data from the register in order to format and transmit the shared payload message to the target utility management center. Proceeding this way saves computing power and memory on the utlity monitoring device as payload protection by means of cryptographic algorithms needs to be done only once and can be done in advance. Moreover, the transmission to each utility management center A, B or C can take place at a different time.

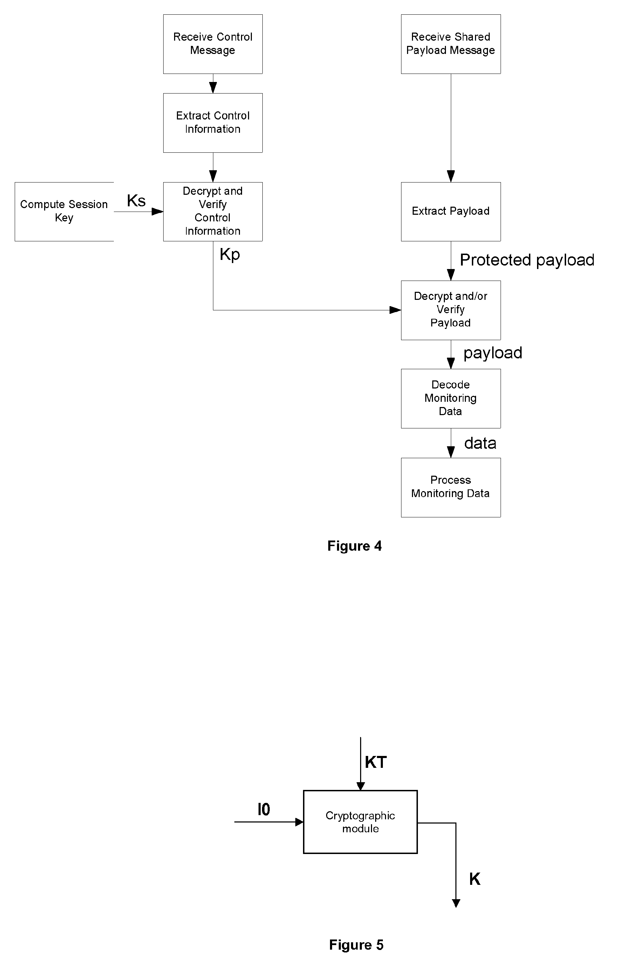

Figure 4 illustrates the reverse operations taking place at the utility management center that will now be described:
● The utility management center receives a control message, and extracts the Control Information from this control message.
● The utility management center decrypts and verifies the Control Information to derive the payload key Kp in accordance with the secure communication protocols in place between the utility management center and the utility monitoring device. Preferably, this secure communication uses point-to-point shared secrets such as a secure authenticated channel session key Ks jointly computed by the utility management center and the utility monitoring device. Such point-to-point security protocols are defined for instance in the ANSI C12.22 or IEC 62056/COSEM standard specifications.
● The utility management center receives a shared payload message, and extracts the protected payload from this shared payload message.
● The utility management center derives the clear payload from the protected payload by means of the formerly computed payload key Kp. This operation may comprise one or more steps of decryption and/or verification of the protected payload data chunks using the payload key Kp, in accordance with the protection method applied by the utility monitoring device.

Further variants to the system and method represented by Figure 3 and Figure 4 are also possible.

For instance the encryption and message formatting operations may be executed in a different order by the utility monitoring device.

The payload message may also be pre-processed and stored in memory buffers or registers by the utility monitoring device.

The utility monitoring device and the utility management center may exchange further messages to synchronize the control messages exchanges or the session key Ks update.

Beyond the purely functional monitoring payload messages, a number of messages need to be sent upstream by the utility usage monitoring device to the utility management center, in particular in the case of security credentials and security firmware updates require a secure reception and execution acknowledge message back to the utility initiating the upgrade. For practical reasons, the upgrade messages may be broadcast or multicast downstream meaning all targeted smart meters will receive and handle them at the same time, and consequently send the acknowledge messages back upstream at the same time, thus resulting in a possible congestion of the network traffic and peak processing scalability issues at the utility management center.

In order to better balance the upstream load between the multiple connected smart meters, the smart meter register buffering can be programmed to last more or less long depending on certain parameters such as the smart meter serial number, the smart meter firmware version number, the smart meter utility rate subscription or consumption information, or an explicit command to be sent individually to the smart meter by the utility in a unicast downstream message.

It is also possible to embed the explicit commands into the firmware upgrade broadcast or multicast messages, in particular if the smart metering messaging protocol enables to define target groups of meters: each group may then share an explicit command, and the firmware upgrade payload will be appended with a concatenation of explicit commands, one for each target group. In that scenario, ideally the utility vendor will define the group membership based on geographical/localization information if available, so that the upstream load is also balanced at local grid level.

As the secret key of the utility meter must remain secret and is a priori unknown from the utility providers, the present invention suggests the implementation of a method involving a third remote entity, named as supervision center. The aim of this method is to manage a communication between a utility meter for metering at least one utility consumption, and at least one remote utility management center; this communication being supervised by at least one supervision center. To this end, the utility meter comprises:
- a memory to store at least one personal key K, at least one unique identifier ID0, and an utility consumption value V as metered by the utility meter,
- a cryptographic module.

This method comprises the steps of:
- requesting to the supervision center by a remote utility management center the association with a particular utility meter, the request comprising at least the unique identifier ID0 of the utility meter,
- transmitting by the supervision center a key data to the remote utility management center,
- reading by the utility meter the utility consumption value V,
- preparing a utility message comprising the utility consumption value V, said utility message being encrypted by the personal key K,
- sending said utility message to the remote utility management center.

The key data transmitted by the supervision center to the remote utility management center is typically the personal key K of the utility meter.

Alternatively, the request sent to the supervision center in order to register the association of a remote utility management center with a particular utility meter could be also done by the utility meter instead of the remote utility management center. In this case, this request should further comprise the unique identifier ID of this remote utility management center.

As the supervision center may need to know the secret key KT of each utility meters that it deals with, this supervision center may belong, for instance, to the manufacturer of the utility meters. Alternately, such a supervision center could be any third authority which is independent from any remote utility management centers and which is entitled to deal with the secret key KT of utility meters.

When, the owner of a utility meter will get a subscription from a remote utility management center of his choice, the remote utility management center sends a request for registration to the supervision center. Then, this supervision center will update its database by recording a new pairing between the utility meter and this remote utility management center. To avoid disclosure of the secret key KT stored in the memory of the utility meter, the supervision center will generate a personal key K which will be used for exchanging communications between the utility meter and its utility provider, namely the remote utility management center to which it is associated after subscription. To this end, the supervision center also comprises a cryptographic module which can be the same cryptographic module as the utility meter. As shown in Figure 5, the personal key K is the result of the processing of an initialization value I0 by said cryptographic module initialized by said secret key KT. Thus, the method further comprises the steps of:
- transmitting by the supervision center an initialization message comprising the initialization value I0 to the utility meter,
- processing of the initialization value I0 by the cryptographic module of the utility meter initialized by the secret key KT in order to obtain the personal key K.

In one embodiment, the supervision center transmits the initialization message comprising the initialization value I0 directly to the utility meter and transmits the personal key K to the remote utility management center.

In another embodiment, the supervision center transmits this initialization message and the personal key K to the remote utility management center and then this remote utility management center transmits at its turn this initialization message to the utility meter. Therefore, transmission of the initialization value I0 can be achieved via the remote utility management center if the latter forwards the initialization message to the utility meter.

Having received the initialization value I0, the utility meter is then able to calculate the personal key K, by means of its cryptographic module, in order to decrypt/encrypt the messages exchanged with its remote utility management center. Once calculated by the utility meter, the personal key K can be stored in the memory of the utility meter. Alternately, the initialization value I0 can be stored in this memory and the communication key K can be calculated each time a messages must be decrypted/encrypted.

Preferably, the supervision center will comprise a database DB recording for each utility meter at least the association between this utility meter and one of the remote utility management centers. To each association will be assigned at least an identifier ID0 pertaining to the utility meter, its personal key KT, an identifier ID pertaining to the remote utility management center, and the aforementioned personal key K.

In another embodiment, the initialization message further comprises a signature S and the utility meter comprises means to verify this signature in order to allow the loading of the initialization value I0 into its cryptographic module.

In another embodiment, the initialization value I0 generated by the supervision center is a random value. Alternatively, the initialization message further comprises a validity data T, for instance a validity date or a validity time interval defined e.g. by two dates, one starting date and one end date. According to this embodiment, the utility meter comprises timer means producing a current time CT and the method further comprises the step of verifying that the current time CT is within a validity period determined from said validity data T in order to allow the loading of the initialization value I0 into the cryptographic module of the utility meter.

In a further embodiment, the remote utility management center comprises a remote management key K0 and the method further comprises the steps of:
- loading the remote management key K0 into the memory of the utility meter,
- generating by the utility meter of a payload key Kp,
- encrypting the utility consumption value V by the payload key Kp,
- forming a cryptogram C0 formed by the encryption of the payload key Kp by the remote management key K0,
- including the encrypted payload and the cryptogram in the utility message.

According to a further embodiment of the invention, the utility meter could be monitored and managed by more than one remote utility management centers. Such a situation might occur if the utility meter would able to meter different kinds of utility at the same time, e.g. monitoring simultaneously electric power and water consumptions. Alternately, this utility meter could be able to work in accordance with a time scheduler, so that providing of electric power, gas or water could be carried out for some parts of time by a first remote utility management center and for other parts of time by another provider.

## Claims

1. Utility meter for metering at least one utility consumption comprising:
- a memory to store at least one personal key (K), at least one unique identifier (ID0), at least one utility consumption value (V) metered by the utility meter, at least one remote management key (K0, K1),
- means for sending/receiving utility messages,
- means to generate a payload key (Kp),
- means to encrypt the utility consumption value (V) with the payload key (Kp),
- means to generate at least one cryptogram (C0, C1), this cryptogram being formed by the payload key (Kp) encrypted by the remote management key (k0, K1),
- means to send the encrypted utility consumption value (V) and the cryptogram (C0, C1) into at least one utility message.

2. Utility meter of claim 1, wherein it comprises a secret key (KT) and a cryptographic module, said utility meter having means to receive an initialization message comprising an initialization value (I0), said personal key (K) being the result of the processing of the initialization value (I0) by the cryptographic module initialized by the secret key (KT).

3. Utility meter of claim 2, wherein the memory stores an authority key (Ka), the utility meter comprising means to decrypt the initialization value (I0) contained in the initialization message with the authority key (Ka).

4. Utility meter of claim 3, wherein the initialization message further comprises a signature (S), said utility meter comprising means to verify the signature in order to allow the loading of the initialization value (I0) into the cryptographic module.

5. Method to manage a communication between a utility meter for metering at least one utility consumption, and at least one remote utility management center, said communication being supervised by at least one supervision center, said utility meter comprising:
- a memory to store at least one personal key (K), at least one unique identifier (ID0), and an utility consumption value (V) as metered by the utility meter,
- a cryptographic module,
said method comprising the steps of:
- requesting to the supervision center by a remote utility management center the association with a particular utility meter, said request comprising at least the unique identifier (ID0) of said utility meter,
- transmitting by the supervision center a key data to the remote utility management center
- reading by the utility meter the utility consumption value (V),
- preparing a utility message comprising the utility consumption value (V), said utility message being encrypted by the personal key (K),
- sending said utility message to the remote utility management center.

6. Method of claim 5, wherein the key data is the personal key (K) of the utility meter. (si on remplace directement dans la Rev 5 "key data" par "personal key K", n'y aura-t-il pas un problème de compréhension quant à savoir comment la clé K de UM est tout à coup connue du SC ?)

7. Method of claim 6, wherein the supervision center comprises a cryptographic module, the utility meter comprises a secret key (KT) stored in its memory, said personal key (K) being the result of the processing of an initialization value (I0) by said cryptographic module initialized by said secret key (KT),
the method further comprising the steps of:
- transmitting by the supervision center an initialization message comprising said initialization value (I0) to the utility meter,
- processing of the initialization value (I0) by the cryptographic module of the utility meter initialized by the secret key (KT) in order to obtain the personal key (K).

8. Method of claim 7, wherein the transmission of the initialization message comprising said initialization value (I0) during said transmitting step is achieved through said remote utility management center which forwards said initialization message to the utility meter.

9. Method of claim 7 or 8, wherein the initialization message further comprises a signature (S), said utility meter verifying the signature in order to allow the loading of the initialization value (I0) into its cryptographic module.

10. Method of any of the claims 7 to 9, said utility meter comprising timer means producing a current time (CT), and wherein the initialization message further comprises a validity data (T), said method comprising the step of verifying that the current time (CT) is within a validity period determined from said validity data (T) in order to allow the loading of the initialization value (I0) into the cryptographic module of the utility meter.

11. Method of any of the claims 5 to 10, wherein the remote utility management center comprises a remote management key (K0), said method further comprising the steps of:
- loading the remote management key (K0) into the memory of the utility meter,
- generating by the utility meter of a payload key (Kp),
- encrypting the utility consumption value (V) by the payload key (Kp),
- forming a cryptogram (C0) formed by the encryption of the payload key (Kp) by the remote management key (K0),
- including the encrypted payload and the cryptogram in the utility message.
